# FASCICULE DE BREVET EUROPEEN

(11) **EP 1 853 472 B1**
(45) Date de publication et mention de la délivrance du brevet: **27.04.2011**
(21) Numéro de dépôt: 06709532.3
(22) Date de dépôt: 24.02.2006
(51) Int. Cl.: B60W 20/00, B60W 10/06, B60W 10/08

(54) **PROCEDE DE DECOLLAGE RAPIDE D'UN VEHICULE HYBRIDE**
VERFAHREN ZUM SCHNELLSTARTEN EINES HYBRIDFAHRZEUGS
METHOD FOR FAST STARTING OF A HYBRID VEHICLE

(30) Priorité: 01.03.2005 FR 0550544
(43) Date de publication de la demande: 14.11.2007
(73) Titulaire: PEUGEOT CITROËN AUTOMOBILES S.A., 78140 Vélizy Villacoublay (FR)
(72) Inventeur: RIMAUX, Stéphane, F-92190 Meudon (FR); MIRANDA, Paulo, F-92400 Courbevoie (FR)
(86) Numéro de dépôt international: PCT/FR2006/050162
(87) Numéro de publication internationale: WO 2006/092522

(56) Documents cités:
- EP-A- 0 965 475
- EP-A- 1 201 479
- DE-A1- 10 204 981
- US-A- 6 083 139
- US-B1- 6 253 127
- US-B1- 6 543 561

## Description

La présente invention concerne un procédé de décollage rapide d'un véhicule hybride. L'invention a pour but d'optimiser une accélération du véhicule lors de son décollage, tout en assurant notamment une fourniture de couple appliqué aux roues assurant un haut niveau d'agrément. L'invention trouve une application particulièrement avantageuse dans le domaine des véhicules automobiles, mais elle pourrait aussi être mise en oeuvre dans tout type de véhicule terrestre à motorisation hybride.

Dans le présent texte, le terme "démarrage" est utilisé pour désigner la mise en rotation du vilebrequin du moteur thermique. Le terme de "décollage" est utilisé pour désigner la mise en mouvement du véhicule, lorsqu'il passe d'une vitesse nulle à une vitesse non nulle. Le terme "actionnement" est utilisé pour la machine électrique, lorsqu'elle est mise sous tension.

On connaît des véhicules dits hybrides qui combinent l'utilisation d'une énergie thermique et d'une énergie électrique pour réaliser leur traction. Cette combinaison des énergies est réalisée de manière à optimiser le rendement énergétique de tels véhicules. Cette optimisation du rendement énergétique permet aux véhicules hybrides de polluer et consommer largement moins que les véhicules qui fonctionnent uniquement à l'énergie thermique et dont le rendement n'est pas optimisé.

Plusieurs types de dispositifs de transmission de puissance pour véhicule hybride ont été plus particulièrement développés.

On connaît d'abord des dispositifs de transmission hybrides comportant un moteur thermique et deux machines électriques. L'arbre de roues, l'arbre du moteur thermique et les arbres des deux machines électriques sont reliés entre eux par l'intermédiaire d'un ensemble mécanique. Cet ensemble mécanique peut être constitué par deux trains épicycloïdaux. Un tel dispositif de transmission est décrit dans la demande française FR-A-28832357.

On connaît aussi des dispositifs de transmission hybrides comportant un moteur thermique et une seule machine électrique. Un arbre de ce moteur thermique et un arbre de cette machine électrique sont reliés entre eux par l'intermédiaire d'un embrayage. En outre, une entrée d'un élément variateur de vitesse, tel qu'une boîte de vitesses ou un variateur, est reliée à l'arbre de la machine électrique. Une sortie de cet élément variateur de vitesse est reliée à un arbre des roues du véhicule. Un tel dispositif est susceptible de fonctionner dans deux modes différents. Dans un premier mode appelé mode électrique, seule la machine électrique assure la traction du véhicule. Dans un second mode appelé mode hybride, la machine électrique et le moteur thermique assurent ensemble la traction du véhicule.

Dans le mode hybride, la puissance fournie par la machine électrique permet d'ajuster le couple appliqué sur l'arbre de roues tout en adaptant le couple et le régime du moteur thermique à un point de fonctionnement où la consommation énergétique du véhicule est optimisée.

Chaque organe du dispositif de transmission: moteur thermique, embrayage, machine électrique et élément variateur de vitesse, est piloté par un dispositif de contrôle rapproché qui est lui-même commandé par une unité de commande électronique appelée calculateur de supervision. Ce calculateur peut être indépendant ou intégré dans un autre calculateur comme le calculateur moteur par exemple. Ce calculateur de supervision exécute des programmes pour synchroniser notamment entre elles des actions des différents organes du dispositif de transmission. Cette synchronisation est réalisée de manière à répondre au mieux à une volonté d'accélération d'un conducteur.

Plus précisément, en fonction de l'accélération souhaitée par l'utilisateur et de conditions de roulage du véhicule, le calculateur de supervision, pilote les différents organes du dispositif, décide du mode de fonctionnement, coordonne les phases transitoires des différents organes, et choisit des points de fonctionnement du moteur et de la machine électrique. Par conditions de roulage, on entend des paramètres du véhicule ainsi que des paramètres extérieurs susceptibles d'influencer la conduite du véhicule. La vitesse et l'accélération du véhicule sont par exemple des paramètres du véhicule, tandis que le degré d'inclinaison d'une pente sur laquelle roule le véhicule ou le taux d'humidité d'une route constituent des paramètres extérieurs. Le document US 6543561 décrit un procédé de décollage rapide d'un véhicule hybride selon le préamble de la revendication 1, et qui indique l'état de la technique.

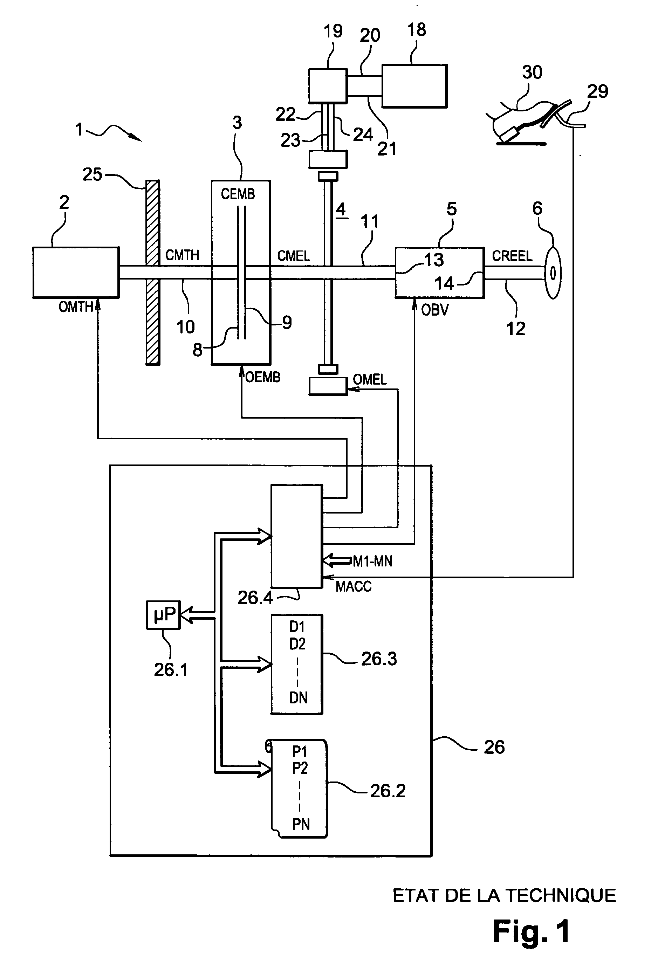

La figure 1 montre une représentation schématique d'un dispositif 1 de transmission selon l'état de la technique. Ce dispositif 1 de transmission comporte un moteur thermique 2, un embrayage 3, une machine électrique 4, un élément 5 variateur de vitesse constitué par exemple par une boîte de vitesses, et des roues 6 qui forment une chaîne de traction.

Plus précisément, l'embrayage 3 comporte un premier disque 8 et un deuxième disque 9 d'embrayage. Le premier disque 8 d'embrayage est relié à un arbre 10 du moteur thermique 2. Et le deuxième disque 9 d'embrayage est relié à un arbre 11 de la machine électrique 4. En outre, l'arbre 11 de la machine électrique 4 et un arbre 12 des roues 6 sont reliés respectivement à une entrée 13 et à une sortie 14 de l'élément 5 variateur de vitesse.

Comme on l'a vu, le dispositif 1 de transmission est susceptible de fonctionner dans deux modes différents. Dans le mode électrique, l'arbre 12 des roues 6 est entraîné par la machine électrique 4 seulement. L'embrayage 3 est alors ouvert, de manière que l'arbre 10 du moteur thermique 2 et l'arbre 11 de la machine électrique 4 ne soient pas accouplés entre eux. Dans ce mode électrique, la machine électrique 4 se comporte généralement en moteur. Ainsi, dans une réalisation particulière, la machine 4 prélève de l'énergie à un système 18 de stockage, tel qu'une batterie, par l'intermédiaire notamment d'un onduleur 19. La batterie 18 délivre un signal de tension continue. Dans le mode électrique, l'onduleur 19 transforme donc le signal de tension continue observable entre les bornes 20 et 21 de la batterie, en signaux de tension alternatifs qui sont appliqués sur des phases 22-24 de la machine électrique 4.

Dans le mode hybride, l'arbre 12 des roues 6 est entraîné par le moteur thermique 2 et la machine électrique 4. L'embrayage 3 est alors fermé, de manière que l'arbre 10 du moteur thermique 2 et l'arbre 12 de roues 6 soient accouplés entre eux. La machine électrique 4 se comporte en moteur ou en générateur et transmet une puissance à l'arbre 12 des roues 6 pour ajuster le couple observable sur cet arbre 12 au couple de consigne. De la même manière que celle expliquée précédemment, la machine électrique 4 transfert de l'énergie avec la batterie 18.

Dans le mode hybride et le mode électrique, pendant des phases de récupération qui correspondent à un ralentissement du véhicule, la machine électrique 4 se comporte en générateur. Pendant ces phases de récupération, la machine électrique 4 fournit de l'énergie à la batterie 18. L'onduleur 19 transforme alors les signaux de tension alternatifs observables sur les phases 22-24 de la machine électrique 4 en un signal de tension continu qui est appliqué aux bornes 20 et 21 de la batterie 18.

Dans la pratique, la machine électrique 4 est souvent une machine synchrone triphasée. Les machines de ce type présentent l'intérêt d'être compactes et de posséder un bon rendement.

Dans une réalisation particulière, le dispositif 1 de transmission comporte un volant 25 d'inertie. Ce volant d'inertie 25 contribue à assurer une fonction de filtration des ascyclismes pour assurer une continuité dans la transmission du couple du moteur thermique 2 à l'arbre 6 des roues 12.

Par ailleurs, le dispositif 1 de transmission selon l'état de la technique comporte une unité de commande faisant l'objet, selon un mode de réalisation non limitatif, d'un calculateur de supervision 26 spécifique. Ce calculateur de supervision 26 comporte un microprocesseur 26.1, une mémoire programme 26.2, une mémoire de données 26.3, et une interface 26.4 d'entrées-sorties qui sont reliés entre eux par l'intermédiaire d'un bus 31 de communication.

La mémoire de données 26.3 comporte des données D1-DN correspondant notamment aux caractéristiques des différents organes du dispositif 1 de transmission, à savoir le moteur thermique 2, l'embrayage 3, la machine électrique 4 et l'élément 5 variateur de vitesse. Certaines des données D1-DN correspondent par exemple aux temps de réponse de ces organes 2-5. D'autres données D1-DN correspondent par exemple à des couples maximums et à des couples minimums applicables sur des arbres associés aux organes 2-5.

L'interface 26.4 d'entrées-sorties reçoit des signaux M1-MN observables en sortie de capteurs (non représentés). Ces capteurs permettent de détecter les conditions de roulage du véhicule. Par exemple, des capteurs d'accélération et de vitesse permettent de connaître respectivement l'accélération et la vitesse du véhicule à un instant donné. Un capteur d'inclinaison peut permettre de savoir si le véhicule se trouve dans une pente ou pas. En outre, l'interface 26.4 reçoit un signal MACC correspondant à un couple à la roue souhaité par un conducteur. En effet, lorsqu'il souhaite accélérer, le conducteur appuie à l'aide de son pied 30 sur une pédale 29. En fonction du degré d'enfoncement de cette pédale 29, le signal MACC est engendré.

En fonction des données D1-DN, des conditions de roulage, et de l'accélération souhaitée par le conducteur, le microprocesseur 26 exécute un des programmes P1-PN qui engendre la mise en fonctionnement du dispositif 1 de transmission dans un mode particulier, et l'ajustement du couple observable sur l'arbre 12 des roues 6. Plus précisément, lors de l'exécution d'un des programmes P1-PN, le microprocesseur 26 commande l'interface 26.4, de manière que des signaux OMTH, OEMB, OMEL et OBV soient émis respectivement à destination du moteur thermique 2, de l'embrayage 2, de la machine électrique 4 et de l'élément 5 variateur de vitesse pour les commander.

Dans le cas d'un changement de mode de fonctionnement, certains des programmes P1-PN engendrent des émissions de signaux OMTH, OEMB, OMEL, et OBV assurant la transition d'un mode à un autre.

En outre, les organes 2-5 du dispositif 1 de transmission comportent chacun un système de contrôle interne qui n'est pas représenté. Ces systèmes de contrôle permettent de réguler la valeur des couples observables sur des arbres associés à ces organes 2-5.

Dans un exemple, pour une demande d'accélération faible de la part du conducteur, le calculateur de supervision 26 commande les différents organes 2-5, de manière à faire fonctionner le dispositif 1 de transmission dans le mode électrique. Le couple appliqué sur l'arbre 12 des roues 6 est alors égal au couple observable sur l'arbre 11 de la machine électrique 4, à un rapport de démultiplication près. En revanche, pour une demande d'accélération forte, le calculateur de supervision 26 commande les différents organes 2-5, de manière à faire fonctionner le dispositif 1 de transmission dans le mode hybride. Le couple appliqué sur l'arbre 12 des roues 6 est alors égal au couple observable sur l'arbre 11 de la machine électrique 4, lequel est alors égal à la somme du couple observable sur l'arbre 10 du moteur thermique 2 et de celui de la machine électrique 4.

On connaît aussi des situations de vie du véhicule dans lesquelles une demande d'accélération rapide est faite par le conducteur, alors que le véhicule est à l'arrêt. De telles demandes d'accélération sont appelées des décollages performances dits décollages perfo. Pour réaliser ces décollages performances, le calculateur de supervision 26 commande notamment l'embrayage 3, le moteur thermique 2 et la machine électrique 4, de manière à exploiter les puissances du moteur thermique 2 et de la machine électrique 4 au mieux. Autrement dit le calculateur de supervision 26 commande les organes 2-5, de manière qu'un temps de décollage du véhicule soit minimal et qu'un niveau d'accélération soit maximal.

Pour réaliser un décollage performance, un premier procédé connu est mis en oeuvre avec le dispositif 1 de l'état de la technique. Dans un premier temps de ce procédé, le moteur thermique 2 est démarré avec la machine électrique 4, tandis que l'élément 5 variateur de vitesse est au neutre. Puis, dans un deuxième temps, l'embrayage 3 s'ouvre et le régime de la machine électrique 4 s'annule, enfin le rapport de première est engagé afin d'utiliser le moteur thermique 2 et la machine électrique 4 pour la traction. L'inconvénient de ce premier procédé est qu'aucune traction n'est possible tant que le moteur thermique 2 n'est pas démarré. Le temps de réponse du dispositif 1 de transmission mettant en oeuvre ce procédé est donc très long.

On connaît aussi un deuxième procédé dans lequel on commence la traction du véhicule dans le mode électrique. Puis, une fois que le régime de la machine électrique 4 est suffisant, on démarre le moteur thermique 2 par patinage de l'embrayage 3 et on passe au mode hybride. Dans ce procédé, l'embrayage 3 transmet un couple d'arrachement au moteur thermique 2. Ce couple d'arrachement a pour objet d'entraîner ce moteur thermique 2 en rotation et de le faire démarrer. Pendant la transmission du couple d'arrachement, la machine électrique 4 applique un couple qui compense ce couple d'arrachement, de manière qu'il n'y ait pas de variations dans le couple appliqué à l'arbre 12 des roues 6.

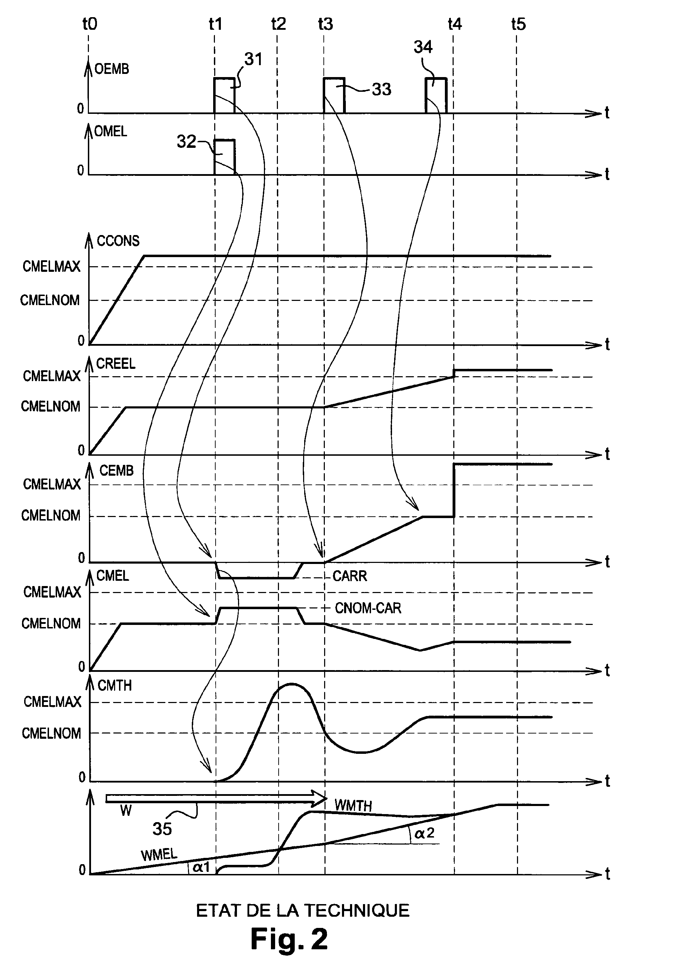

La figure 2 montre des chronogrammes de signaux observables sur les différents organes 2-5 du dispositif 1 de transmission selon l'état de la technique, lorsque le deuxième procédé connu est mis en oeuvre.

Plus précisément, la figure 2 montre les signaux de couple CEMB, CMEL et CMTH qui correspondent respectivement aux couples observables sur l'embrayage 3, sur l'arbre 11 de la machine électrique 4, et sur l'arbre 10 du moteur thermique 2.

La figure 2 montre également l'évolution dans le temps de signaux de couple CCONS et CREEL correspondant respectivement au couple de consigne à appliquer sur l'arbre 12 des roues 6 et au couple effectivement observable sur cet arbre 12. Le signal de couple CCONS de consigne est élaboré notamment à partir du signal d'accélération MACC et des signaux M1-MN issus des capteurs.

Les signaux OEMB et OMEL sont émis par le calculateur de supervision 26 à destination de l'embrayage 3 et de la machine électrique 4 pour les commander. Pour plus de simplicité, les signaux OMTH et OBV qui commandent respectivement le moteur thermique 2 et l'élément 5 variateur ne sont pas représentés.

La figure 2 montre également sur un même chronogramme l'évolution dans le temps de la vitesse de rotation WMEL de la machine électrique 4, et de la vitesse de rotation WMTH du moteur thermique 2.

A l'instant t0, le véhicule est à l'arrêt. La machine électrique 4 et le moteur thermique 2 possèdent donc une vitesse de rotation nulle. A l'instant t0, lorsque par exemple le conducteur enfonce la pédale 29 d'accélération d'un angle supérieur à un angle seuil, ou lorsqu'une variation angulaire de la pédale est supérieure à une valeur seuil, le calculateur 26 reçoit un signal MACC correspondant à une demande de décollage performance.

Entre les instants t0 et t1, le dispositif 1 de transmission entre dans une première phase d'accélération. Dans cette première phase, seule la machine électrique 4 assure la traction du véhicule. Plus précisément, dans cette première phase, le couple CCONS de consigne augmente de manière exponentielle, en correspondance notamment avec la demande d'accélération du conducteur. Ce couple CCONS de consigne augmente, de telle sorte qu'à l'instant t1, il est déjà supérieur au couple crête CMELMAX de la machine électrique 4. Par ailleurs, entre les instants t0 et t1, la machine électrique 4 possède un couple CMEL qui augmente pour se stabiliser au couple nominal CMELNOM de cette machine électrique 4. La vitesse de rotation WMEL de la machine électrique 4 augmente proportionnellement avec la vitesse véhicule, mais elle n'est pas suffisante pour pouvoir démarrer le moteur thermique 2. Le moteur thermique 2 est donc à l'arrêt et son arbre 10 n'est pas accouplé avec l'arbre 11 de la machine électrique 4. Le moteur thermique 2 possède donc un couple CMTH et une vitesse WMTH de rotation nuls. Comme le moteur est arrêté, le couple CREEL mesuré sur l'arbre 12 des roues 6 est égal au couple CMEL de la machine électrique 4. Le couple CREEL mesuré sur l'arbre 12 est donc inférieur au couple de consigne CCONS attendu. Aucun couple n'est observable sur l'embrayage 3.

Entre les instants t1 et t2, le dispositif 1 de transmission entre dans une deuxième phase d'accélération. Dans cette deuxième phase, comme dans la première, seule la machine électrique 4 assure la traction du véhicule. Cette deuxième phase a pour objet de faire démarrer le moteur thermique 2. Plus précisément, dans cette deuxième phase, le couple CCONS est toujours supérieur au couple crête CMELMAX. A l'instant t1, la machine 4 possède une vitesse de rotation WMEL suffisante pour faire entrer en rotation le moteur thermique 2 à un régime permettant son démarrage. Un premier signal 31 est alors émis par le calculateur de supervision 26 à destination de l'embrayage 3. Ce signal 31 commande cet embrayage 3, de manière que cet embrayage 3 transmette un couple d'arrachement CARR au moteur thermique 2 pour le faire entrer en rotation. Ce couple d'arrachement CARR est prélevé à la chaîne de traction. De ce fait, un deuxième signal 32 est émis par le calculateur 26 en même temps que le signal 31, et à destination de la machine électrique 4. Ce signal 32 commande la machine électrique 4, de manière que son couple CMEL compense le couple d'arrachement CARR prélevé par l'embrayage 3. Ainsi, dans cette deuxième phase d'accélération, le signal de couple CEMB d'embrayage décroît et atteint une valeur négative égale à la valeur du couple d'arrachement CARR. Pendant ce temps, le signal de couple CMEL de la machine électrique 4 augmente d'une valeur -CARR opposée à la valeur du couple d'arrachement CARR. Un signal de couple CMTH du moteur thermique 2 correspondant au couple de démarrage de ce moteur thermique 2 est alors observable. Le moteur thermique 2 possède alors une vitesse de rotation WMTH qui augmente, mais qui reste inférieure à la vitesse de rotation WMEL de la machine électrique 4. Le moteur thermique 2 ne transmet donc toujours pas de couple à l'arbre 6 des roues 12. Le couple CREEL mesuré sur l'arbre 12 est donc toujours inférieur au couple de consigne CCONS attendu sur cet arbre 12. Cette deuxième phase d'accélération a pour but de faire passer au moteur thermique 2 ses premières compressions. Après avoir passé ses premières compressions, le moteur thermique 2 fonctionne à un régime WMTH suffisant pour être autonome.

Entre les instants t2 et t3, le dispositif 1 de transmission entre dans une troisième phase d'accélération. Dans cette troisième phase, le moteur thermique 2 monte en régime, de manière que l'embrayage 3 puisse se réouvrir. Plus précisément, dans cette troisième phase, le couple de consigne CCONS est toujours supérieur à CMELMAX. Le signal de couple CMEL de la machine électrique 4 diminue pour passer d'une valeur CNOM-CARR à la valeur de couple CMELNOM nominal de la machine électrique 4. Et le signal de couple CEMB de l'embrayage 3 redevient nul. La phase de transmission du couple d'arrachement CARR se termine ainsi entre t2 et t3. Comme l'arbre 10 du moteur thermique 2 n'est toujours pas accouplé avec l'arbre 11 de la machine électrique 4, le couple CREEL est égal au couple CMEL de la machine électrique 4 et reste inférieur au couple de consigne CCONS. La vitesse de rotation WMEL de l'arbre 11 de la machine électrique 4 augmente linéairement avec la vitesse véhicule. La vitesse de rotation WMTH de l'arbre 10 du moteur thermique 2 augmente pour être à l'instant t3 supérieure à la vitesse de rotation WMEL de la machine électrique 4.

Entre les instants t3 et t4, le dispositif 1 de transmission entre dans une quatrième phase d'accélération. Dans cette quatrième phase, il se produit dans un premier temps un accostage du moteur thermique 2 puis une fermeture de l'embrayage 3. Plus précisément, d'abord, un signal 33 est émis par le calculateur de supervision 26 à destination de l'embrayage 3. Ce signal 33 commande la mise en glissement des disques 8 et 9 d'embrayage l'un par rapport à l'autre. Le moteur thermique 2 transmet alors une partie de son couple CMTH à l'arbre 12 des roues 6 par l'intermédiaire de l'embrayage 3. Le signal de couple CEMB observable sur l'embrayage 3 augmente alors avec un profil calibrable, tel qu'un profil linéaire. Le signal de couple CMEL de la machine électrique 4 diminue de manière globalement symétrique par rapport au signal de couple CEMB de l'embrayage 3. Dans la variante dessinée en traits mixtes, la machine 3 électrique est maintenue plein couple, au couple CMELNOM, de manière que le véhicule fonctionne à un maximum de puissance lors du décollage. Le couple CREEL augmente puisque le moteur thermique 2 commence à transmettre une partie de son couple à l'arbre 11. Par ailleurs, lors de l'accostage du moteur thermique 2, la vitesse de rotation WMTH du moteur thermique 2 converge vers celle WMEL de la machine électrique 4. Lorsque ces deux vitesses sont suffisamment proches, un signal 34 est émis à destination de l'embrayage 3 par le calculateur de supervision 26. Ce signal 34 commande la fermeture de cet embrayage 3. Les vitesses de rotation du moteur WMTH et de la machine WMEL deviennent alors identiques.

Entre les instants t4 et t5, le dispositif 1 de transmission entre dans une cinquième phase d'accélération. Dans cette cinquième phase, les organes moteurs 2 et 4 convergent vers leur signal de consigne de couple optimal, s'ils ne l'ont pas déjà atteinte. Plus précisément, le couple CCONS de consigne est toujours supérieur au couple CMELMAX. Le couple CEMB d'embrayage augmente et dépasse alors la valeur de consigne de couple du moteur thermique 2.

Ce deuxième procédé offre un meilleur temps de réponse que le premier procédé. Toutefois, ce deuxième procédé reste long car il présente deux phases d'accélération. Pendant la première phase qui se situe entre t0 et t3, la traction du véhicule est réalisée par la machine électrique 4 seule. Ainsi, entre les instants t0 et t3, la représentation graphique de la vitesse de rotation WMEL de la machine électrique croît de manière linéaire et forme un angle α1 avec l'axe des abscisses. Pendant la seconde phase qui se situe entre t3 et t5, la traction du véhicule est réalisée, soit par la machine électrique 4 et l'embrayage 3 lorsque cet embrayage 3 est glissant, soit par la machine électrique 4 et le moteur thermique 2 lorsque l'embrayage 3 est fermé. Ainsi, à partir de l'instant t3 où l'embrayage 3 est mis en glissement, la représentation graphique de la vitesse de rotation WMEL de la machine électrique croît de manière linéaire et forme un angle α2 avec l'axe des abscisses qui est supérieur à l'angle α1. Ces deux phases sont dues au fait que le moteur thermique 2 doit être entraîné par la machine électrique 4 avec un régime suffisamment élevé pour devenir autonome.

Le temps de mise à disposition du moteur thermique 2, qui correspond au temps qui s'écoule entre l'instant t0 où un décollage performance est demandé et l'instant t3 où le moteur thermique 2 commence à transmettre une partie de son couple, est donc relativement long. Ce temps de mise à disposition est représenté par la flèche 35 sur le chronogramme des vitesses.

Par ailleurs, lors du décollage performance, la gestion du pilotage de l'embrayage 3 et de la machine électrique 4 présente de grosses difficultés de mise en oeuvre. Ces difficultés sont dues essentiellement à la grande sensibilité et à l'incertitude des réponses des organes 2-5. En effet, d'une température à une autre, ces organes 2-5 ne possèdent pas les mêmes temps de réponse. Par ailleurs, d'une température à une autre, des couples observables sur des arbres associés à ces organes 2-5 varient.

Il est donc difficile de faire coïncider parfaitement dans le temps le prélèvement du couple CARR d'arrachement sur l'embrayage 3 et l'application du couple CNOM-CARR de compensation par la machine électrique 4. Or cette synchronisation dans les prélèvements des couples est nécessaire pour garantir l'absence de rupture de couple lors du démarrage du moteur thermique 2.

Il est aussi difficile d'appliquer un couple de compensation exactement égal au couple prélevé par l'embrayage 3. En effet, il est difficile d'estimer le couple à appliquer sur l'embrayage 3 lors de la transmission du couple d'arrachement CARR suivant la température du moteur thermique 2.

Par ailleurs, entre les instants t1 et t4, la machine électrique 4 ne peut pas fournir son couple crête CMELMAX pour réaliser le couple de consigne CCONS. En effet, la machine électrique 4 ne peut pas fonctionner à son couple crête CMELMAX car elle doit posséder une garde de couple permettant de compenser le couple d'arrachement CARR prélevé par l'embrayage 3, quel que soit le régime du véhicule. Autrement dit, la machine électrique 4 doit toujours fonctionner au maximum à son couple nominal CMELNOM, de manière à pouvoir fonctionner à tout moment à un couple supérieur lui permettant de compenser le couple d'arrachement CARR.

Toutefois, cette garde de couple n'est pas toujours disponible. En effet, cette garde de couple n'est disponible intégralement que lorsque la machine électrique 4 fonctionne à un régime WMEL inférieur à son régime de base. Pour des régimes de la machine électrique 4 supérieurs au régime de base, le démarrage du moteur thermique 2 peut se traduire donc par un prélèvement de couple aux roues 6. Ce prélèvement de couple engendre un non-respect entre l'accélération effective du véhicule et l'accélération souhaitée par le conducteur. Dans un exemple, la valeur du régime de base vaut 2000 tours/min. Des procédés similaires avec les mêmes inconvénients ou inconvénients similaires sont connus des documents US6543561, US-A-6083139 et EP-A-1 201 479.

L'invention se propose donc notamment de résoudre ces problèmes de temps de mise à disposition du moteur thermique et de synchronisation des actions de l'embrayage et de la machine électrique lors de la transmission du couple d'arrachement. L'invention se propose en outre de faire démarrer le moteur thermique sans jamais prélever de couple aux roues, tout en optimisant la consommation énergétique du véhicule.

A cette fin, dans l'invention, l'architecture connue du dispositif de transmission est complétée par un système de démarrage qui est indépendant de la machine électrique. Ce système de démarrage indépendant entraîne le moteur thermique indépendamment de la machine électrique. Dans l'invention, ce n'est donc plus l'embrayage mais le système de démarrage qui transmet le couple d'arrachement au moteur thermique afin de le faire démarrer. Ainsi, ce système de démarrage permet de dissocier les problèmes de démarrage du moteur avec ceux de la chaîne de traction du véhicule.

Conformément à l'invention, pour réaliser des décollages performances, le moteur thermique est démarré en même temps que la machine électrique fait décoller le véhicule. Autrement dit, le moteur thermique est démarré à l'aide du système de démarrage, en même temps que l'on actionne la machine électrique. Le terme en même temps englobe le cas où le moteur est démarré simultanément à l'actionnement de la machine électrique et le cas où le moteur thermique est démarré quelques millisecondes après l'actionnement de la machine électrique. Ainsi, dès la demande d'un décollage performance, le couple disponible sur l'arbre de roues est égal au couple maximal de la machine électrique. Bien que le véhicule se trouve à l'arrêt, une accélération du véhicule peut donc être produite très rapidement.

En outre, l'introduction du système de démarrage entraîne une simplification du pilotage de l'embrayage et de la machine électrique lors d'un décollage performance. La nouvelle architecture permet ainsi d'éviter la synchronisation entre les actions de l'embrayage et de la machine électrique. Par ailleurs, le collage de l'embrayage est moins critique car le couple passant par l'embrayage n'est plus observable. Dans cette nouvelle architecture, le problème d'estimation du couple appliqué par la machine électrique pour compenser le couple d'arrachement a disparu, puisque l'embrayage ne participe plus directement au démarrage du moteur.

Ce système de démarrage permet aussi une meilleure exploitation des caractéristiques de l'embrayage et de la machine. Ainsi, il n'est plus nécessaire que la machine électrique possède une garde de couple pour compenser le couple d'arrachement prélevé par l'embrayage. En effet, dans l'invention, c'est le système de démarrage qui transmet au moteur thermique son couple de démarrage. Lors d'un décollage performance, la machine électrique peut donc fonctionner à son couple maximal pour assurer la traction du véhicule, pendant le temps où le moteur thermique n'est pas disponible. En général, la machine électrique fonctionne à son couple crête tant que l'embrayage demeure ouvert. Et lorsque l'embrayage est fermé, on fait fonctionner la machine électrique soit à son couple crête, soit à un couple inférieur si un couple de consigne peut être respecté.

L'invention concerne donc un procédé de décollage rapide d'un véhicule, conforme à l'objet de la revendication 1.

L'invention sera mieux comprise à la lecture de la description qui suit et à l'examen des figures qui l'accompagnent. Ces figures sont données à titre illustratif mais nullement limitatif de l'invention. Ces figures montrent :
- Figure 1 (déjà décrite): une représentation schématique d'un dispositif de transmission de puissance selon l'état de la technique ;
- Figure 2 (déjà décrite): des chronogrammes représentant l'évolution dans le temps de signaux observables sur des organes d'un dispositif de transmission de l'état de la technique, lors d'un décollage performance ;
- Figure 3 : une représentation schématique d'un dispositif de transmission de puissance selon l'invention comportant un système de démarrage ;
- Figure 4 : des chronogrammes représentant l'évolution dans le temps de signaux observables sur des organes d'un dispositif de transmission selon l'invention, lors d'un décollage performance.

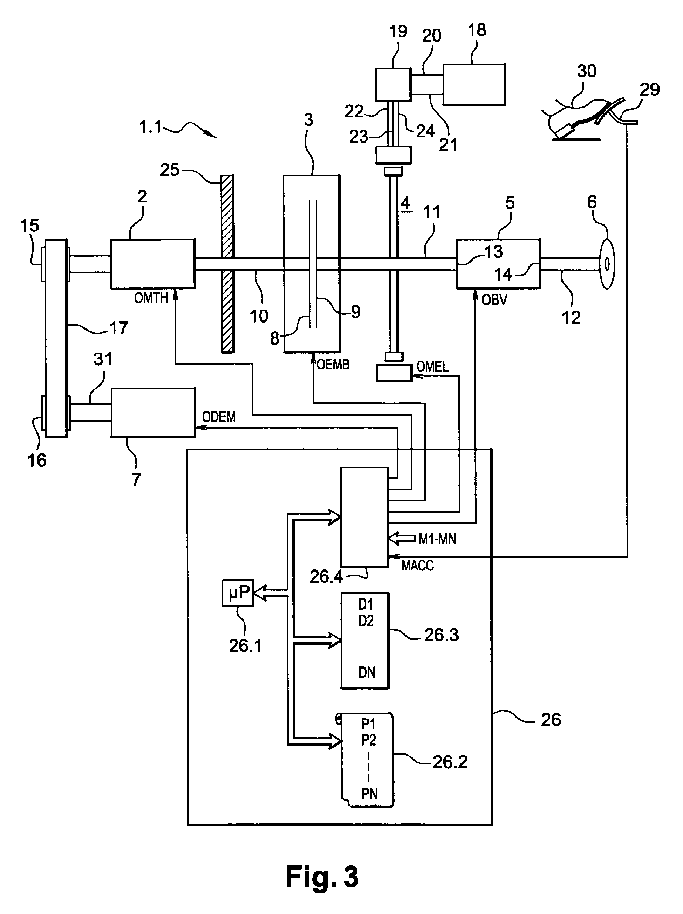

La figure 3 montre une représentation schématique d'un dispositif 1.1 de transmission selon l'invention. Comme le dispositif 1 de transmission selon l'état de la technique, ce dispositif 1.1 de transmission comporte un moteur thermique 2, un embrayage 3, une machine électrique 4, un élément 5 variateur de vitesse et des roues 6. Ces quatre organes 2-5 et les roues 6 du véhicule forment une chaîne de traction, et sont agencés de la même manière que dans le dispositif 1 de transmission selon l'état de technique. En outre, conformément à l'invention, le dispositif 1.1 de transmission comporte un système de démarrage 7 relié au moteur thermique 2.

Ce système de démarrage 7 est relié au moteur thermique 2 et l'entraîne en rotation afin de le faire démarrer. Le système de démarrage 7 est indépendant mécaniquement de la machine électrique 4. En effet, le système de démarrage 7 démarre le moteur thermique 2 sans prélever de puissance à cette chaîne de traction. En conséquence, le démarrage du moteur thermique 2 a moins d'impact sur la continuité du couple appliqué sur l'arbre 12 des roues 6.

Le système de démarrage 7 ne participe donc jamais à la traction.

Il est de ce fait dimensionné en conséquence pour générer une puissance juste suffisante pour faire démarrer le moteur thermique 2, puissance qui est sensiblement inférieure à celle de la machine électrique 4 et qui ne nécessite pas de tension d'alimentation élevée.

Dans une réalisation particulière, le moteur thermique 2 comporte une première poulie 15 qui est accrochée à une extrémité de son arbre 10. Et le système de démarrage 7 comporte une deuxième poulie 16 qui est accrochée à une extrémité de son arbre 31. Une courroie 17 passe par les gorges de ces deux poulies 15 et 16, de manière à relier le système de démarrage 7 au moteur thermique 2.

Dans l'invention, la machine électrique 4 est toujours reliée à un dispositif 18 de stockage, tel qu'une batterie. En variante, le système 18 de stockage est une machine à inertie, ou un supercondensateur.

Dans une réalisation particulière, le dispositif 1 de transmission peut aussi comporter le volant 25 d'inertie. Ce volant 25 d'inertie est relié à l'arbre 10 du moteur thermique 2, entre ce moteur thermique 2 et l'embrayage 3. Par ailleurs, le dispositif 1.1 de transmission selon l'invention comporte aussi le calculateur de supervision 26. Lors de l'exécution d'un des programmes P1-PN, le microprocesseur 26.1 commande l'interface 26.4, de manière à ce que, outre les signaux OMTH, OEMB, OMEL, OBV, un signal ODEM soit émis à destination du système de démarrage 7 pour le commander. Les signaux OMTH et OMEL commandent respectivement le moteur thermique 2 et la machine électrique 4, de manière que ce moteur thermique 2 fonctionne toujours à son point de fonctionnement optimal où, pour une puissance donnée, sa consommation est minimum.

Dans le cas d'un changement de mode de fonctionnement, certains des programmes P1-PN engendrent des émissions de signaux OMTH, OEMB, OMEL, OBV et ODEM permettant la transition d'un mode à un autre.

Le système de démarrage 7 comporte aussi un système de contrôle interne qui n'est pas représenté. Ce système de contrôle permet de réguler la valeur du couple d'arrachement que ce système de démarrage 7 doit appliquer à l'arbre 10 du moteur thermique 2.

Dans l'invention, l'embrayage 3 est un embrayage sec ou humide. En variante, l'embrayage 3 comporte plus de deux disques.

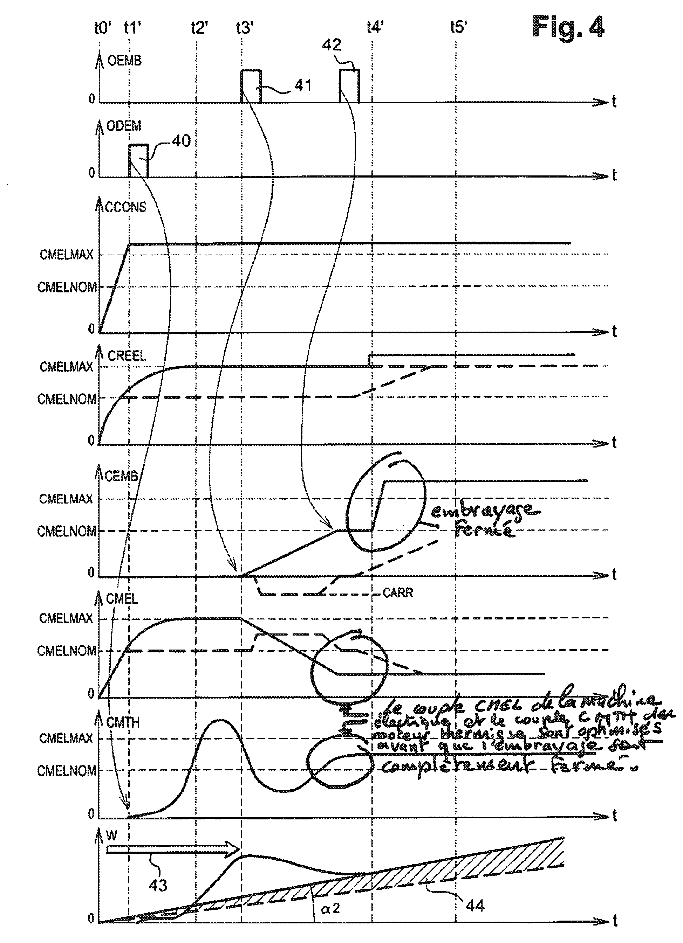

La figure 4 montre notamment des chronogrammes des signaux observables sur les différents organes 2-5 du dispositif 1.1 de transmission selon l'invention. Comme pour la figure 2, ces signaux sont observables lors d'un décollage performance. Les signaux associés au dispositif 1 de transmission selon l'état de la technique sont représentés en traits pointillés pour pouvoir les comparer avec les signaux associés au dispositif 1.1 de transmission selon l'invention représentés en traits pleins.

Pour plus de simplicité, seuls les signaux OEMB et ODEM qui jouent un rôle prépondérant lors de ce décollage performance ont été représentés.

A l'instant t0', comme précédemment, le véhicule est à l'arrêt. La machine électrique 4 et le moteur thermique 2 possèdent donc chacun une vitesse de rotation nulle. A l'instant t0', lorsque par exemple, le conducteur enfonce la pédale 29 d'accélération d'un angle supérieur à un angle seuil, ou lorsqu'une variation angulaire de la pédale est supérieure à une valeur seuil, le calculateur 26 reçoit un signal MACC correspondant à une demande de décollage performance.

Entre les instants t0' et t1', le dispositif 1.1 de transmission entre dans une première phase d'accélération. Dans cette première phase, seule la machine électrique 4 assure la traction du véhicule. Plus précisément, dans cette première phase, le couple CCONS de consigne augmente, si bien qu'à l'instant t1', il est déjà supérieur au couple nominal CMELNOM de la machine électrique 4. Par ailleurs, le signal de couple CMEL de la machine électrique 4 augmente et suit l'allure du signal de couple CCONS. Le moteur thermique 2 est à l'arrêt et son arbre 10 n'est pas accouplé avec l'arbre 11 de la machine électrique 4. Le moteur thermique 2 possède donc un couple CMTH nul. Le signal de couple CREEL mesurable sur l'arbre 12 de roues 6 suit donc l'allure du signal de couple CCONS de consigne. En outre, la vitesse de rotation du moteur thermique 2 est nulle tandis que la vitesse de rotation WMEL de la machine électrique 4 augmente de manière linéaire. Cette première phase est beaucoup plus courte que la première phase d'accélération du procédé de l'état de la technique. En effet, grâce au système de démarrage 7, il n'est plus nécessaire d'attendre que la machine électrique 4 ait atteint un régime suffisant pour faire démarrer le moteur thermique 2. Dans une mise en oeuvre particulière, cette première phase dure le temps que la décision de démarrage du moteur thermique soit prise: 0ms en théorie, entre 20 et 40ms en pratique.

Entre les instants t1' et t2', le dispositif 1.1 de transmission entre dans une deuxième phase d'accélération. Cette deuxième phase a pour objet de faire démarrer le moteur thermique 2. A cet effet, à l'instant t1', à l'issue de l'exécution d'un des programmes P1-PN par le calculateur 26, un signal 40 est émis à destination du système de démarrage 7. Ce signal 40 commande le système de démarrage 7 qui entraîne en rotation le moteur thermique 2. Un signal de couple CMTH correspondant au couple de démarrage de ce moteur thermique 2 est alors observable. L'arbre 10 du moteur thermique 2 n'est toujours pas accouplé avec l'arbre 11 de la machine électrique 4, cette dernière assurant encore seule la traction du véhicule. Par ailleurs, le couple CCONS de consigne est toujours supérieur au couple crête CMELMAX de la machine électrique 4. Le couple CMEL de la machine électrique 4 augmente, de manière à fournir un couple à l'arbre 12 de roues supérieur à celui qui aurait été observable sans le système 7 de démarrage. En effet, contrairement à la machine électrique 4 du dispositif 1, la machine électrique 4 est susceptible de fonctionner à son couple crête CMELMAX, lorsque le moteur thermique 2 n'est pas disponible, c'est à dire tant qu'il ne fournit pas de couple aux roues 6. La garde de couple n'est plus nécessaire, puisque la machine électrique 4 n'intervient plus directement dans le démarrage du moteur thermique 2. Le moteur thermique 2 possède alors une vitesse WMTH de rotation qui est inférieure à celle de la machine électrique 4. Comme dans la deuxième phase d'accélération du procédé de l'état de la technique, le moteur thermique 2 passe ses premières compressions de manière à atteindre un régime suffisant pour être autonome. En général, dès que le moteur thermique 2 est autonome, le calculateur 26 émet un signal à destination du système de démarrage 7, de manière à couper ce système de démarrage 7, c'est à dire l'arrêter.

Entre les instants t2' et t3', le dispositif 1.1 de transmission entre dans une troisième phase d'accélération. Dans cette troisième phase, la machine électrique 4 fonctionne toujours à son couple crête CMELMAX. En variante, si la demande conducteur est plus faible, c'est à dire que le couple CCONS de consigne est inférieur à CMELMAX, la machine 4 suit ce couple CCONS. Comme l'arbre 11 de la machine 4 et l'arbre 10 du moteur 2 ne sont pas accouplés, le signal de couple CREEL suit le signal de couple CMEL. La vitesse de rotation WMTH de ce moteur thermique 2 augmente pour être à l'instant t3' supérieure à la vitesse de rotation WMEL de la machine électrique 4. La vitesse de rotation WMEL de la machine électrique 4 augmente toujours de manière linéaire. Aucun couple CEMB n'est observable sur l'embrayage 3. Cette troisième phase a pour objet de faire monter en régime le moteur thermique 2 pour permettre, comme on va le voir ci-après, une mise en glissement des disques 8 et 9 d'embrayage 3 l'un par rapport à l'autre.

Entre les instants t3' et t4', le dispositif 1.1 de transmission entre dans une quatrième phase d'accélération. Dans cette quatrième phase, il se produit dans un premier temps un accostage du moteur thermique 2 puis une fermeture de l'embrayage 3. Plus précisément, d'abord, à l'instant t3', un signal 41 est émis à destination de l'embrayage 3. Ce signal 41, comme avant le signal 33, commande la mise en glissement des disques 8 et 9 d'embrayage l'un par rapport à l'autre. Le moteur thermique 2 transmet alors une partie de son couple CMTH à l'arbre 12 des roues 6 par l'intermédiaire de l'embrayage 3. Le couple observable sur l'embrayage 3 augmente donc de manière calibrable, comme par exemple d'une manière linéaire, puisque cet embrayage 3 transmet un couple à la chaîne de traction. Le signal de couple CMEL de la machine électrique 4 peut alors diminuer symétriquement par rapport au couple CEMB de l'embrayage, si le couple de consigne CCONS est respecté. Dans le cas où le couple de consigne CCONS ne serait pas respecté, le signal de couple CMEL peut rester à son maximum CMELMAX.

Plus généralement, lors d'un décollage performance, la machine électrique est commandée, soit de manière à fournir son couple maximum pour donner au véhicule un maximum de puissance, soit de manière à fournir seulement une partie de son couple si le couple de consigne CCONS peut être respecté. En faisant fonctionner la machine électrique 4 à un couple inférieur à son couple crête lorsque CCONS peut être respecté, on économise l'énergie électrique de la batterie. Lors de l'accostage du moteur thermique 2, la vitesse de rotation WMTH du moteur thermique 2 converge vers celle WMEL de la machine électrique 4. Lorsque ces deux vitesses sont sensiblement égales, un signal 42 est émis à destination de l'embrayage 3 pour commander sa fermeture. Les vitesses de rotation du moteur thermique WMTH et de la machine électrique WMEL deviennent alors identiques. Dans la pratique, le signal 42 est émis lorsque la différence entre la vitesse de rotation WMTH du moteur thermique 2 et la vitesse de rotation WMEL de la machine électrique 4 est inférieure en valeur absolue à une valeur comprise entre 0 et 15% de la vitesse de rotation WMEL de la machine 4.

Avec un procédé de l'état de la technique, entre t3' et t4', il est possible que le moteur thermique 2 commence à peine à être démarré par l'embrayage 3 dont le signal de couple est représenté en pointillés. En revanche, dans le procédé selon l'invention, la phase d'accostage est déjà commencée.

Entre les instants t4' et t5', le dispositif 1.1 de transmission entre dans une cinquième phase d'accélération. Dans cette cinquième phase, le signal de couple CCONS de consigne est toujours supérieur au couple CMELMAX. En variante, le couple CCONS augmente, d'une manière calibrable comme par exemple à la manière d'un échelon. Comme précédemment, dans cette cinquième phase, les couples CMTH et CMEL des organes moteurs 2 et 4 convergent vers leur valeur de consigne optimale au regard d'une consommation du moteur thermique 2, s'ils ne l'ont pas déjà atteinte. Le couple observable sur l'embrayage 3 se ferme de manière à devenir supérieur au couple du moteur thermique 2. Les vitesses de rotation WMTH et WMEL du moteur thermique 2 et de la machine électrique 4 augmentent avec la vitesse véhicule.

Ainsi, lors du démarrage du moteur thermique 2, l'embrayage 3 est ouvert et demeure ouvert pendant une durée prédéterminée qui s'étend entre t0' et t3'. Cette durée peut être fonction du couple de consigne CCONS demandé par le conducteur et / ou du temps que met le moteur thermique 2 pour devenir autonome. En variante, l'embrayage 3 est déjà fermé lors du démarrage du moteur thermique 2. Dans cette variante, le système de démarrage 7 et la machine électrique 4 participent ensemble à la transmission du couple d'arrachement CARR au moteur thermique 2. Dans un exemple, le système 7 de démarrage est relié au moteur thermique 2 par l'intermédiaire d'un premier ensemble réducteur qui possède un rapport inférieur à celui d'un deuxième ensemble réducteur par l'intermédiaire duquel la machine électrique 4 et le moteur thermique 2 sont reliés, de manière que le couple appliqué à l'arbre 10 du moteur thermique 2 par le système de démarrage 7 soit supérieur au couple appliqué à cet arbre 10 par la machine électrique.

En variante, le démarrage du moteur thermique 2 est commandé dès l'instant t0. Ainsi, dans cette variante, le signal 40 est émis dès l'instant t0'.

Le temps de mise à disposition du moteur thermique 2 correspond ici au temps qui s'écoule entre l'instant t0' où un décollage performance est demandé et l'instant t3' où le moteur thermique 2 commence à transmettre une partie de son couple. On l'a vu, la première phase d'accélération du procédé selon l'invention notamment est beaucoup plus courte que la première phase d'accélération du procédé de l'état de la technique. Le temps de mise à disposition du moteur thermique 2 dans le procédé selon l'invention est donc plus court que le temps de mise à disposition de ce moteur dans le procédé de l'état de la technique. Le temps de mise à disposition du moteur thermique dans le procédé selon l'invention est d'ailleurs représenté par une flèche 43 qui est plus courte que la flèche 35.

En outre, la représentation graphique de la vitesse de rotation WMEL de la machine électrique 4 forme toujours un angle α2 avec l'axe des abscisses. Entre les instants t0 et t5, la machine électrique 4 possède donc une vitesse WMEL de rotation toujours supérieure à celle qu'elle possédait lorsqu'elle était utilisée avec le dispositif 1 de transmission de l'état de la technique. A cet effet, dans l'invention, la traction du véhicule est réalisée très rapidement par le moteur thermique 2 et la machine électrique 4. Le procédé selon l'invention permet donc de gagner en accélération lors du décollage performance par rapport au procédé selon l'état de la technique. Ce gain en accélération est représenté sur le chronogramme des vitesses par des hachures 44.

Par ailleurs, dans l'invention, pendant le temps de mise à disposition du moteur thermique 2, la machine électrique 4 est susceptible de fonctionner à son couple maximum. Alors qu'avec un procédé selon l'état de la technique, la machine électrique 4 devait fonctionner au maximum à son couple nominal pour pouvoir compenser le couple d'arrachement CARR à tout moment. En conséquence, pendant toute la durée du décollage performance, le couple CREEL mesuré avec le procédé selon l'invention est supérieur au couple mesuré CREEL avec le procédé de l'état de la technique.

En outre, dans l'invention, lors de la transmission du couple d'arrachement CARR par le système de démarrage 7, des actions appliquées sur l'embrayage 3 par le moteur thermique 2 et par la machine électrique 4 le sont indépendamment l'une de l'autre. Une action par la machine électrique 4 est celle de faire décoller le véhicule. Une action par le moteur 2 est une action par le système de démarrage 7 qui est celle de démarrer le moteur thermique 2. En effet, comme le système de démarrage 7 est indépendant, il n'est plus nécessaire de synchroniser ces actions.

Avec le procédé selon l'invention, le démarrage du moteur thermique 2 est plus robuste qu'avec un procédé selon l'état de la technique. En effet, le moteur thermique 2 est démarré avec un couple constant, quelles que soient les conditions de roulage du véhicule. De plus, l'arrachement se fait indépendamment des roues 5. Il y a donc beaucoup moins de risque de ressenti par le conducteur. En effet, il y a un fort risque d'inconfort avec le procédé connu de démarrage par l'embrayage 3 car les couples d'arrachements et donc passant par l'embrayage 3 sont difficiles à estimer.

Grâce à l'invention, lors d'un décollage performance, on diminue donc le temps de réponse, tout en augmentant l'accélération du véhicule et le confort lors du démarrage du moteur thermique 2.

## Revendications

1. - Procédé de décollage rapide d'un véhicule, ce procédé mettant en oeuvre un dispositif (1.1) de transmission de puissance comportant une machine électrique (4) reliée d'une part à un moteur thermique (2) par un embrayage (3) et d'autre part à un arbre (12) de roues (6), dans lequel, pour faire accélérer rapidement le véhicule lorsqu'il est à l'arrêt,
- on actionne la machine électrique (4), et
- on démarre le moteur thermique (2) en lui transmettant un couple (CARR) d'arrachement, en même temps que l'on actionne la machine électrique (4), à l'aide d'un système de démarrage (7) relié à ce moteur thermique (2) et indépendant mécaniquement de la machine électrique (4), **caractérisé en ce que** :
- une fois que le moteur thermique (2) est démarré, on attend qu'il passe ses premières compressions pour être autonome, puis on coupe le système de démarrage (7), et durant une période de temps à partir d'un instant où l'embrayage commence à transmettre du couple jusqu'à une période de temps où l'embrayage devient complètement fermé, on fait converger le couple (CMTH) du moteur thermique (2), et le couple (CMEL) de la machine électrique (4) vers leur valeur de consigne optimale au regard de la consommation du moteur thermique (2).

2. - Procédé selon la revendication 1, **caractérisé en ce que** :
- lors du démarrage du moteur thermique (2), l'embrayage (3) est ouvert et demeure ouvert pendant une durée prédéterminée.

3. - Procédé selon la revendication 2, **caractérisé en ce que** :
- on fait fonctionner la machine électrique (4) à son couple crête (CMELMAX) tant que l'embrayage (3) demeure ouvert.

4. - Procédé selon l'une des revendications 2 à 3, **caractérisé en ce que** :
- après avoir démarré le moteur thermique (2) et après avoir actionné la machine électrique (4), on augmente une vitesse de rotation (WMTH) du moteur thermique (2) jusqu'à ce qu'elle soit supérieure à une vitesse de rotation (WMEL) de la machine électrique (4).

5. - Procédé selon l'une des revendications 2 à 4, **caractérisé en ce que** :
- après avoir démarré le moteur thermique (2) et après avoir actionné la machine électrique (4), on fait glisser des disques (8, 9) de l'embrayage (3) l'un par rapport à l'autre, un des disques de cet embrayage (3) étant relié à un arbre (10) du moteur thermique (2), un autre disque de cet embrayage (3) étant relié à un arbre (11) de la machine électrique (4).

6. - Procédé selon la revendication 5, **caractérisé en ce que** :
- on fait converger une vitesse de rotation (WMTH) du moteur thermique (2) vers une vitesse de rotation (WEL) de la machine électrique (4), et
- on ferme l'embrayage (3) lorsque la vitesse de rotation (WMTH) du moteur thermique (2) est sensiblement égale à la vitesse de rotation (WMEL) de la machine électrique (4),

7. - Procédé selon l'une des revendications 1 à 6, **caractérisé en ce que**:
- lorsque l'embrayage (3) est fermé, on fait fonctionner la machine électrique (4) soit à son couple crête (CMELMAX), soit à un couple inférieur si un couple de consigne (CCONS) peut être respecté.

8. - Procédé selon l'une des revendications 1 à 7, **caractérisé en ce que** :
- on enclenche le décollage rapide lorsqu'une pédale (29) d'accélération est enfoncée d'un angle supérieur à un angle seuil, ou lorsqu'une variation angulaire de cette pédale (29) est supérieure à une valeur seuil.

9. - Procédé selon l'une des revendications 1 à 8, du procédé **caractérisé en ce que** :
- au départ du procédé, la vitesse de rotation (WMTH) du moteur thermique (2) et la vitesse de rotation (WEL) de la machine électrique (4) sont nulles.

10. - Dispositif apte à la mise en oeuvre du procédé selon l'une des revendications 1 à 9.

## Claims

1. Method for the fast setting in motion of a vehicle, this method utilizing a power transmission device (1.1) having an electrical machine (4) connected on the one hand to a heat engine (2) via a clutch (3) and on the other hand to a shaft (12) of wheels (6), in which, to make the vehicle accelerate quickly when it is stopped,
- the electrical machine (4) is actuated, and
- the heat engine (2) is started by transmitting to it a breakaway torque (CARR), at the same time as the electrical machine (4) is actuated, by means of a starting system (7) connected to this heat engine (2) and mechanically independent of the electrical machine (4),
**characterized in that**
- once the heat engine (2) has been started, one waits until it runs through its first compressions so that it is autonomous, then the starting system (7) is cut off, and during a period of time starting from a moment at which the clutch begins to transmit torque up to a period of time at which the clutch becomes completely closed, the torque (CMTH) of the heat engine (2) and the torque (CMEL) of the electrical machine (4) are made to converge toward their optimal set-point value with respect to the consumption of the heat engine (2).

2. Method according to Claim 1, **characterized in that**:
- on startup of the heat engine (2), the clutch (3) is open and remains open for a predetermined duration.

3. Method according to Claim 2, **characterized in that**:
- the electrical machine (4) is operated at its peak torque (CMELMAX) as long as the clutch (3) remains open.

4. Method according to one of Claims 2 to 3, **characterized in that**:
- after having started up the heat engine (2) and after having actuated the electrical machine (4), a rotation speed (WMTH) of the heat engine (2) is increased until it is greater than a rotation speed (WMEL) of the electrical machine (4).

5. Method according to one of Claims 2 to 4, **characterized in that**:
- after having started up the heat engine (2) and after having actuated the electrical machine (4), plates (8, 9) of the clutch (3) are made to slide with respect to one another, one of the plates of this clutch (3) being connected to a shaft (10) of the heat engine (2), another plate of this clutch (3) being connected to a shaft (11) of the electrical machine (4).

6. Method according to Claim 5, **characterized in that**:
- a rotation speed (WMTH) of the heat engine (2) is made to converge toward a rotation speed (WEL) of the electrical machine (4), and
- the clutch (3) is closed when the rotation speed (WMTH) of the heat engine (2) is substantially equal to the rotation speed (WMEL) of the electrical machine (4).

7. Method according to one of Claims 1 to 6, **characterized in that**:
- when the clutch (3) is closed, the electrical machine (4) is operated either at its peak torque (CMELMAX) or at a lower torque if a setpoint torque (CCONS) can be complied with.

8. Method according to one of Claims 1 to 7, **characterized in that**:
- the fast setting in motion is triggered when an acceleration peal (29) is pushed in by an angle greater than a threshold angle, or when an angular variation of this pedal (29) is greater than a threshold value.

9. Method according to one of Claims 1 to 8, of the method **characterized in that**:
- at the beginning of the method, the rotation speed (WMTH) of the heat engine (2) and the rotation speed (WEL) of the electrical machine (4) are zero.

10. Device able to implement the method according to one of Claims 1 to 9.

## Patentansprüche

1. Verfahren zum schnellen Starten eines Fahrzeugs, wobei dieses Verfahren eine Vorrichtung (1.1) zum Übertragen von Leistung umsetzt, die eine Elektromaschine (4) aufweist, die einerseits mit einem Verbrennungsmotor (2) über eine Kupplung (3) und andererseits mit einer Welle (12) von Rädern (6) verbunden ist, bei dem man zum schnellen Beschleunigen des Fahrzeugs, wenn es stillsteht
- die Elektromaschine (4) betätigt und
- den Verbrennungsmotor (2) startet, indem man ihm ein Zugmoment (CARR) überträgt und gleichzeitig die Elektromaschine (4) mit Hilfe eines Startsystems (7), das mit diesem Verbrennungsmotor (2) verbunden und mechanisch von der Elektromaschine (4) unabhängig ist, betätigt,
**dadurch gekennzeichnet, dass**:
- man, sobald der Verbrennungsmotor (2) gestartet ist, wartet, dass er seine ersten Verdichtungen durchläuft, um autonom zu sein, und man dann das Startsystems (7) abschaltet und während einer Zeitspanne ausgehend von einem Augenblick, in dem die Kupplung beginnt, Moment zu übertragen und bis zu einer Zeitspanne, in der die Kupplung komplett geschlossen wird, das Moment (CMTH) des Verbrennungsmotors (2) und das Moment (CMEL) der Elektromaschine (4) zu ihrem optimalen Sollwert im Hinblick auf den Verbrauch des Verbrennungsmotors (2) konvergieren lässt.

2. Verfahren nach Anspruch 1, **dadurch gekennzeichnet, dass**:
- die Kupplung (3) beim Starten des Verbrennungsmotors (2) offen ist und während einer vorbestimmten Dauer offen bleibt.

3. Verfahren nach Anspruch 2, **dadurch gekennzeichnet, dass**:
- man die Elektromaschine (4) mit ihrem Spitzenmoment (CMELMAX) solange funktionieren lässt, wie die Kupplung (3) offen bleibt.

4. Verfahren nach Anspruch 2 bis 3, **dadurch gekennzeichnet, dass**:
- man nach dem Starten des Verbrennungsmotors (2) und nach dem Betätigen der Elektromaschine (4) eine Drehzahl (WMTH) des Verbrennungsmotors (2) erhöht, wie sie größer ist als eine Drehzahl (WMEL) der Elektromaschine (4).

5. Verfahren nach einem der Ansprüche 2 bis 4, **dadurch gekennzeichnet, dass**:
- man nach dem Starten des Verbrennungsmotors (2) und nach dem Betätigen der Elektromaschine (4) die Scheiben (8, 9) der Kupplung (3) zueinander gleiten lässt, wobei eine der Scheiben dieser Kupplung (3) mit einer Welle (10) des Verbrennungsmotors (2) verbunden ist, und eine andere Scheibe dieser Kupplung (3) mit einer Welle (11) der Elektromaschine (4) verbunden ist.

6. Verfahren nach Anspruch 5, **dadurch gekennzeichnet, dass**:
- man eine Drehzahl (WMTH) des Verbrennungsmotors (2) zu einer Drehzahl (WEL) der Elektromaschine (4) konvergieren lässt, und
- man die Kupplung (3) schließt, wenn die Drehzahl (WMTH) des Verbrennungsmotors (2) im Wesentlichen gleich der Drehzahl (WMEL) der Elektromaschine (4) ist.

7. Verfahren nach einem der Ansprüche 1 bis 6, **dadurch gekennzeichnet, dass**:
- man, wenn die Kupplung (3) geschlossen ist, die Elektromaschine (4) entweder mit ihrem Spitzenmoment (CMELMAX) oder mit einem geringeren Moment funktionieren lässt, wenn ein Sollmoment (CCONS) eingehalten werden kann.

8. Verfahren nach einem der Ansprüche 1 bis 7, **dadurch gekennzeichnet, dass**:
- man das schnelle Starten auslöst, wenn ein Gaspedal (29) mit einem Winkel gedrückt wird, der größer ist als ein Schwellenwinkel, oder wenn eine Winkelvariation dieses Pedals (29) größer ist als ein Schwellenwert.

9. Verfahren nach einem der Ansprüche 1 bis 8 des Verfahrens, **dadurch gekennzeichnet, dass**:
- zu Beginn des Verfahrens die Drehzahl (WMTH) des Verbrennungsmotors (2) und die Drehzahl (WEL) der Elektromaschine (4) gleich Null sind.

10. Vorrichtung, die das Verfahren nach einem der Ansprüche 1 bis 9 ausführen kann.
